# EUROPÄISCHE PATENTSCHRIFT

(11) **EP 0 661 320 B1**
(45) Veröffentlichungstag und Bekanntmachung des Hinweises auf die Patenterteilung: **20.09.2000**
(21) Anmeldenummer: 94120192.3
(22) Anmeldetag: 20.12.1994
(51) Int. Cl.: C08G 18/62, C09D 175/04

(54) **Verfahren zur Beschichtung von Substraten**
Process for coating substrates
Procédé pour revêtir des substrats

(30) Priorität: 23.12.1993 DE 4344028
(43) Veröffentlichungstag der Anmeldung: 05.07.1995
(73) Patentinhaber: E.I. DU PONT DE NEMOURS AND COMPANY, Wilmington Delaware 19898 (US)
(72) Erfinder: Mass, Manfred, D-42275 Wuppertal (DE); Kerber, Herrmann, D-42369 Wuppertal (DE); Stegen, Helga, D-42277 Wuppertal (DE)
(74) Vertreter: Gille Hrabal Struck Neidlein Prop Roos

(56) Entgegenhaltungen:
- EP-A- 0 520 627
- US-A- 4 444 954
- US-A- 4 683 173

## Beschreibung

Die Erfindung betrifft ein Verfahren zur Beschichtung von Substraten mit Überzugsmitteln auf Basis sauer neutralisierter aminfunktioneller (Meth)acrylcopolymerer (die Silbe "(Meth)acryl^{"} bedeutet hier und in der Folge "Methacryl und/oder Acryl"), daß insbesondere zur Lackierung von im Automobilbau gebräuchlichen Kunststoffteilen geeignet ist.

Die DE-A-41 15 588 beschreibt ein Verfahren zur Grundierung von Kunststoffsubstraten unter Verwendung eines Überzugsmittels auf Lösemittelbasis. Als Bindemittelbasis des Überzugsmittels dient ein mit Epoxidharz oder Polyisocyanat vernetzendes (Meth)acrylcopolymer, welches tertiäre Amingruppen aufweisen kann. Nachteilig an dem Überzugsmittel ist sein Gehalt an organischem Lösemittel.

Wäßrige zweikomponentige Überzugsmittel auf Basis hydroxyfunktioneller, mit Amin neutralisierter (Meth)acrylcopolymerer, die mit Polyisocyanat vernetzt werden, sind z.B. in DE-A-38 29 587 beschrieben. Diese Überzugsmittel sind verbesserungsbedürftig hinsichtlich ihrer Haftungseigenschaften, insbesondere auf Kunststoffsubstraten.

Die DE-A- 43 17 791 beschreibt wäßrige zweikomponentige Überzugsmittel auf Basis von oligomeren oder polymeren Polyolen unterschiedlichster Bindemittelbasis und speziellen hydrophobisierten Polyisocyanatvernetzern. Die Polyole können eine Säurezahl oder eine Aminzahl besitzen. Als Neutralisationsmittel für aminfunktionelisierte Polyole werden Essigsäure und Ameisensäure angegeben. Bevorzugt werden diese Überzugsmittel als Wasserklarleck eingesetzt. Ihre Haftung auf Kunststoffsubstraten ist verbesserungsbedürftig.

Die DE-A- 42 29 982 beschreibt für die Kunststofflackierung geeignete wäßrige zweikomponentige Überzugsmittel auf der Basis kationisch oder bevorzugt anionisch stabilisierter Polyole als Bindemittel, die mit Polyisocyanat vernetzen. Über die Natur der verwendeten Neutralisationsmittel wird keinerlei Aussage getroffen. Die Überzugsmittel müssen als Haftvermittler chloriertes Polyolefin enthalten und sie zeichnen sich durch einen relativ hohen Gehalt von 5 bis 40 Gew.-% aromatischem Lösemittel aus. Die Lackierung spannungshaltiger Kunststofformteile mit Überzugsmitteln, die einen hohen Gehalt an aggressiven Lösemitteln, wie z.B. Aromaten, aufweisen, ist problematisch, da es zur Zerstörung des Kunststoffteils führen kann.

Die DE-A-42 03 510 beschreibt wäßrige Beschichtungsmittel aus einer Kombination von a) einer in Wasser gelösten oder dispergierten Polyolkomponente die zusammen mit einem Reaktivverdünner vorliegen kann, und b) einer darin einemulgierten Polyisocyanatkomponente. Dabei weist die Komponente a) chemisch eingebaute Ammoniumgruppen auf. Diese Beschichtungsmittel sollen lange Topfzeiten aufweisen.

Die US-A-4 444 954 beschreibt wäßrige Überzugsmittel, die Bindemittel enthalten, deren Aminogruppen mit einer Säure neutralisiert sein können, die eine Hydroxylgruppe aufweist. Als Vernetzer dient ein blockiertes Isocyanat. Die Überzugsmittel sind besonders für die kathodische Elektroabscheidung auf elektrisch leitfähigen Substraten geeignet.

Aufgabe der Erfindung ist die Bereitstellung eines Verfahrens zur Beschichtung von Substraten mit wäßrigen isocyanatvernetzenden Überzugsmitteln, das insbesondere zu einer verbesserten Haftung auf Kunststoffsubstraten und zu gegebenenfalls nachfolgenden Lackschichten führt.

Es hat sich gezeigt, daß die Aufgabe gelöst wird durch ein Verfahren zur Beschichtung von Substraten durch Auftrag eines wäßrigen Überzugsmittels, das dadurch gekennzeichnet ist, daß man ein wäßriges Überzugsmittel auf der Basis von Polyolen mit Ammoniumgruppen und Polyisocyanaten, das Pigmente und/oder Füllstoffe, lackübliche Additive und ein oder mehrere organische Lösemittel enthalten kann, aufträgt, das
A) als Bindemittel mindestens ein (Meth)acrylcopolymeres mit einer Hydroxylzahl von 20 bis 150 mg KOH/g und mit einer Aminzahl von 10 bis 150 mg KOH/g, jeweils bezogen auf Festharz, wobei 2 bis 50 Gew.-% des Bindemittels-Harzfestkörpers durch ein oder mehrere andere Bindemittel ersetzt sein können, wobei das (Meth)acrylcopolymer mit einer Säure neutralisiert ist, die mindestens eine gegenüber Isocyanat reaktive Gruppe besitzt; und
B) als Vernetzer mindestens ein Polyisocyanat enthält, das blockiert sein kann,
wobei die Komponenten A) und B) in solchen Mengen vorliegen, daß das Verhältnis der Summe der mit Isocyanat reaktiven Gruppen der Bindemittelkomponente A) zu den blockierten und nicht-blockierten Isocyanatgruppen der Komponente B) 1 : 0,5 bis 1 : 3 beträgt.

Die (Meth)acrylcopolymeren (A) können hergestellt werden durch radikalische Copolymerisation von
a1) einem oder mehreren hydroxyfunktionellen, olefinisch ungesättigten Monomeren,
a2) einem oder mehreren aminfunktionellen, mit a1) und a3) copolymerisierbaren, olefinisch ungesättigten Monomeren, und
a3) einem oder mehreren mit a1) und a2) copolymerisierbaren, olefinisch ungesättigten Monomeren ohne funktionelle Gruppe.

Als hydroxyfunktionelle olefinisch ungesättigte Monomere a1) eignen sich insbesondere Hydroxyalkyl(meth)acrylate und Hydroxyalkyl(meth)acrylamide mit Alkylresten von C₂ - C₈. Beispiele sind Hydroxyethyl(meth)acrylat, 2-Hydroxypropyl(meth)acrylat, 4-Hydroxybutyl(meth)acrylat, 6-Hydroxyhexyl (meth)acrylat, Hydroxyethyl(meth)acrylamid, Hydroxypropyl(meth)acrylamid. Ferner können auch durch Umsetzung mit Lactonen, wie z.b. epsilon-Caprolacton, lactonisierte Derivate dieser Hydroxy(meth)acrylverbindungen oder auch die Reaktionsprodukte von (Meth)acrylsäure mit Glycidylverbindungen, wie z.B. Glycidylester von alpha,alpha'-disubstituierten Monocarbonsäuren, eingesetzt werden.

Als aminfunktionelle, olefinisch ungesättigte Monomere a2) eignen sich z.b. die omega-Mono- und insbesondere die omega-Di(C₁ - C₄)alkylamino(C₁ - C₁₈)alkyl(meth)acrylate und -(meth)acrylamide. Beispiele sind N(N,N-Diethylaminopropyl)-(meth)acrylamid, N(N,N-Dimethylaminopropyl)-(meth)acrylamid, acrylamid, N(N,N-Dimethylaminoethyl)-(meth)acrylamid, N-Methylaminopropyl(meth)acrylamid, N-Ethylaminoethyl(meth)acrylamid, N,N-Dimethylaminopropyl(meth)acrylat, N,N-Diethylaminopropyl(meth)acrylat, N,N-Dimethylaminoethyl(meth)acrylat, N,N-Diethylaminoethyl(meth)acrylat, N-Methylaminoethyl(meth)acrylat, N-Ethylaminopropyl(meth)acrylat. Geeignet sind auch durch Ringöffnung der Oxirangruppe von Glycidyl(meth)acrylat mit Mono- oder Di(C₁ - C₄)alkylamin hergestellte Reaktionsprodukte.

Beispiele für geeignete Comonomere a3) sind Vinylmonomere wie Vinylacetat, Vinylpropionat, Vinylester alpha,alpha'-disubstituierter Monocarbonsäuren, Styrol, Vinyltoluol, (C1 - C18)Alkyl(meth)acrylate bzw. -(meth)acrylamide, wie Methyl-, Ethyl-, Propyl-, n-Butyl-, Isobutyl-, tert.-Butyl-, Hexyl-, 2-Ethylhexyl-, Decyl-, Dodecyl-, Stearyl-, Lauryl-, Isobornyl-, Cyclohexyl-, Trimethylcyclohexyl(meth)acrylat bzw. -(meth)acrylamid, (Meth)acrylnitril, Dialkylester der Malein-, Fumar- oder Itaconsäure. Es können aber auch difunktionelle (Meth)acrylate, wie Alkandioldi(meth)acrylate oder difunktionelle (Meth)acrylamide der entsprechenden Alkandiamine eingesetzt werden.

Die (Meth)acrylcopolymeren sollen keine Monomeren mit anionischen oder in anionische Gruppen überführbare Gruppen einpolymerisiert enthalten.

Die radikalische Polymerisation kann nach den üblichen, bekannten Verfahren, wie z.B. Lösungspolymerisation, Emulsionspolyermisation, Substanzpolymerisation durchgeführt werden. Die Herstellung der im erfindungsgemäßen Überzugsmittel enthaltenen (Meth)acrylcopolymeren (A) erfolgt bevorzugt durch Lösungspolymerisation. Bei diesem Verfahren wird ein Lösemittel im Reaktionsgefäß vorgelegt, auf die gewünschte Temperatur erwärmt und das Monomeren/Initiatorgemisch kontinuierlich in einer bestimmten Zeit zudosiert. Weiterhin können auch Kettenüberträger, wie z.B. Mercaptoverbindungen oder dimeres alpha-Methylstyrol, eingesetzt werden. Die Polymerisationstemperatur beträgt zwischen 60 und 140°C, bevorzugt zwischen 80 und 120°C.

Als Lösemittel für die Lösungspolymerisation dienen organische, bevorzugt wassermischbare Lösemittel, die als Bestandteil im erfindungsgemäß verwendeten Überzugsmittel enthalten sein können, wie z.B. Glykolether, wie Butylglykol, Methoxypropanol, Ethoxypropanol, Butyldiglykol, Diethylenglykoldiethylether, Dipropylenglykoldimethylether, Glykoletherester, wie Butylglykolacetat, Methoxypropylacetat, Butyldiglykolacetat.

Die Polymerisation kann in Gegenwart von Radikalinitiatoren, wie z.B. üblichen Peroxiden oder Azoverbindungen durchgeführt werden.

Beispiele für Peroxid-Radikalinitiatoren sind Dialkylperoxide, wie Di-tert.-Butylperoxid, Dicumylperoxid, Diacylperoxide, wie Benzoylperoxid, Hydroperoxide, wie Cumolhydroperoxid, tert.-Butylhydroperoxid, Perester, wie tert.-Butylperbenzoat, tert.-Butylper-2-ethylhexanoat, Peroxydicarbonate, wie Dicyclohexylperoxydicarbonat, Perketale, wie 1,1-Bis-(tert.-Butylperoxy)-3,5,5-trimethylcyclohexan, Ketonperoxide, wie Cyclohexanonperoxid, Methylisobutylketonperoxid.

Beispiele für die als Radikalinitiatoren bevorzugten Azoverbindungen sind 2,2'-Azobis(2,4-dimethylvaleronitril), 2,2'-Azobis(2-methylbutyronitril), Azobisisobutyronitril.

Die Polymerisationsbedingungen (Reaktionstemperatur, Lösemittelkonzentration, Monomerendosierung, Initiatorkonzentration) werden so gewählt, daß die (Meth)acrylcopolymeren (A) gewichtsmittlere Molekularmassen (Mw) (bestimmt durch Gelpermeationschromatographie mit Polystyrol als Standard) zwischen 2000 und 150000 aufweisen.

Die Monomerenzusammensetzung aus den olefinisch ungesättigten Monomeren a1), a2) und a3) wird so gewählt, daß die (Meth)acrylcopolymeren (A) Glasübergangstemperaturen zwischen -20 und +80°C, eine Hydroxylzahl zwischen 20 und 150, bevorzugt zwischen 35 und 120 mg KOH/g und eine Aminzahl zwischen 10 und 150, bevorzugt zwischen 20 und 100 mg KOH/g, jeweils bezogen auf Festharz (A), besitzen.

Ein bevorzugtes Monomerengemisch besteht aus 0,5 bis 40 Gew.-% eines oder mehrerer (Meth)acrylamide von omega-tert.-Aminoalkylaminen und/oder eines oder mehrerer (Meth)acrylate von omega-tert.-Aminoalkoholen, 5 bis 40 Gew.-% eines oder mehrerer Hydroxyalkyl(meth)acrylate und/oder eines oder mehrerer Hydroxyalkyl(meth)acrylamide und 20 bis 94,5 Gew.-% eines oder mehrerer Comonomerer a3).

Nach Beendigung der Polymerisation werden die so erhaltenen organischen Lösungen der (Meth)acrylcopolymeren (A) mit Säuren, die mindestens eine gegenüber Isocyanat reaktive Gruppe besitzen, neutralisiert. Dabei werden solche Mengen an Säure zugesetzt, daß pro Aminäquivalent im (Meth)acrylcopolymeren (A) 0,6 bis 1,5 Äquivalente (Neutralisationsgrad 60 - 150 %), bevorzugt zwischen 0,7 bis 1,2 Äquivalente (Neutralisationsgrad 70 - 120 %) Säure vorhanden sind.

Als Säuren, die mindestens eine gegenüber Isocyanat reaktive Gruppe besitzen, sind beispielsweise ein- oder mehrbasische Carbonsäuren, Phosphonsäuren und Sulfonsäuren mit mindestens einer primären Amin- und/oder sekundären Amin- und/oder Hydroxy- und/oder Marcaptogruppe im Molekül geeignet. Als Beispiele seien genannt Aminocarbonsäuren wie Glutaminsäure, Asparaginsäure, 2-Aminobuttersäure, 4-Aminobuttersäure, alpha,delta-Diaminovaleriansäure, 3,4-Diaminobenzoesäure; Aminosulfonsäuren, wie 2,4-Diamino-toluol-sulfonsäure-(5), 4,4-Diamino-diphenylethersulfonsäure; Hydroxyphosphonsäuren wie 2,2-Dimethylolpropanphosphonsäure. Bevorzugt sind die Hydroxycarbonsäuren, wie z.B. Milchsäure, Glykolsäure, Diglykolsäure, Zitronensäure, Mandelsäure, Apfelsäure, Hydroxypropionsäure, Hydroxyvaleriansäure, Hydroxypivalinsäure, 12-Hydroxystearinsäure, durch Hydrolyse hergestellte monomere oder oligomere Ringöffnungsprodukte von Lactonen, wie z.B. hydrolysiertes epsilon-Caprolacton. Unter den Hydroxycarbonsäuren sind die Polyhydroxycarbonsäuren besonders bevorzugt, wie z.B. Weinsäure, Dihydroxypropionsäure, Dihydroxybernsteinsäure, Dihydroxybenzoesäure, die durch Oxidation von Monosacchariden zugänglichen Polyhydroxycarbonsäuren wie Glukonsäure, Zuckersäure, Schleimsäure, Glucuronsäure und insbesondere Dimethylolalkancarbonsäuren wie Dimethylolessigsäure, Dimethylolpropionsäure, Dimethylolbuttersäure, Dimethylolpentansäure.

Bei diesen Säuren handelt es sich insbesondere um solche, die mit den reaktiven Gruppen, aber vorwiegend nicht mit der Säurefunktion (z.B. der Carboxylgruppe) mit Isocyanat reaktiv sind.

Nach erfolgter Neutralisation erhält man das wäßrige Bindemittel (A) durch portionsweise Zugabe von deionisiertem Wasser bis zum Erreichen eines Festkörpergehaltes von 20 bis 60, bevorzugt zwischen 25 und 50 Gew.-%.

Das erfindungsgemäß eingesetzte Überzugsmittel kann neben dem (Meth)acrylcopolymeren (A) auch 2 bis 50 Gew.-%, bevorzugt zwischen 15 und 30 Gew.-%, bezogen auf Harzfestkörper, an anderen Bindemitteln enthalten. Beispiele sind Polyester, Polyurethane und (Meth)acrylcopolymere mit von (A) abweichender Zusammensetzung. Diese zusätzlichen Bindemittel enthalten bevorzugt gegenüber Isocyanat reaktive Gruppen, wie z.B. Hydroxylgruppen, die eine chemische Einbindung in den Lackfilm gestatten.

Als Vernetzer (B) ist in dem erfindungsgemäß eingesetzten Überzugsmittel mindestens ein blockiertes oder nicht-blockiertes Polyisocyanat in einer solchen Menge enthalten, daß im fertigen Überzugsmittel ein Verhältnis von gegenüber Isocyanat reaktiven Gruppen zu blockierten oder nicht-blockierten Isocyanatgruppen von 1 : 0,5 bis 1 : 3, bevorzugt von 1 : 0,8 bis 1 : 1,5 resuliert. Unter gegenüber Isocyanat reaktive Gruppen wird die Summe aus den Hydroxylgruppen und den gegebenenfalls vorhandenen NH-Gruppen im (Meth)acrylcopolymeren (A) plus den gegenüber Isocyanat reaktiven Gruppen der zur Neutralisation eingesetzten Säure verstanden, d.h. bevorzugt bestehen die gegenüber Isocyanat reaktiven Gruppen aus der Summe der Hydroxylgruppen von (A) plus den Hydroxylgruppen einer Hydroxycarbonsäure.

Als Polyisocyanate dienen übliche aliphatische, cycloaliphatische aromatische und/oder araliphatische Isocyanate mit zwei oder mehr Isocyanatgruppen im Molekül oder deren Umsetzungsprodukte, insbesondere die sich von Diisocyanaten ableitenden Uretdiongruppen enthaltenden Dimerisierungs-oder die Isocyanuratgruppen enthaltenden Trimerisierungsprodukte, die durch Umsetzung von Diisocyanaten mit Wasser hergestellten Biuretpolyisocyanate und die Urethangruppen enthaltenden Umsetzungsprodukte von überschüssigem Diisocyanat mit Polyolen, wie z.B. Trimethylolpropan. Als Beispiele für Diisocyanate seien handelsübliche Diisocyanate genannt wie Diphenylmethandiisocyanat, Toluylendiisocyanat, Tetramethylxylylendiisocyanat, Hexamethylendiisocyanat, Isophorondiisocyanat, Diisocyanatodicyclohexylmethan. Bevorzugt sind die aliphatischen oder cycloaliphatischen Diisocyanate bzw. die sich davon ableitenden Polyisocyanat-Derivate, insbesondere wenn die erfindungsgemäßen Überzugsmittel zur Herstellung einer Deck- oder Klarlackschicht eingesetzt werden sollen.

Besonders bewährt hat sich in den erfindungsgemäß eingesetzten Überzugsmitteln der Einsatz wasserverdünnbarer bzw. besonders wasserverträglicher Polyisocyanate als Vernetzer (B), wie sie z.B. in DE-A-41 29 953 und DE-A-41 36 618 beschrieben sind. Derartige wasserdispergierbare Polyisocyanate werden z.B. von der Firma Bayer unter dem Namen Bayhydur LS 2025 und LS 2032 als Handelsprodukte vertrieben.

Die Polyisocyanate in den erfindungsgemäß eingesetzten Überzugsmitteln können, falls das Überzugsmittel über längere Zeit lagerfähig sein soll, mit aktiven Wasserstoff enthaltenden, monofunktionellen Verbindungen blockiert sein. Die Wahl des unter Rückbildung der freien Isocyanatgruppen thermisch wieder abspaltbaren Blockierungsmittels richtet sich nach den herrschenden Einbrennbedingungen bei der Aushärtung des erfindungsgemäßen Überzugsmittels. Beispiele für geeignete Blockierungsmittel sind Lactame, wie epsilon-Caprolactam, Oxime, wie Methylethylketoxim und Monoalkohole, wie 2-Ethylhexanol und tert.-Butanol; Acetessigester, z.B. Acetessigsäuremethyl- und -ethyl-ester; Malonsäurediester, z.B. Malonsäure-dimethyl- und -diethylester. Der Einsatz der mit blockierten Polyisocyanaten formulierten Überzugsmittel in der Kunststofflackierung eignet sich insbesondere für die Lackierung wärmeformbeständiger Kunststoffe, d.h. solche Kunststoffe, die bei den herrschenden Einbrenntemperaturen formstabil sind. Bevorzugt werden die Polyisocyanatvernetzer (B) unverkappt eingesetzt, d.h. bei den erfindungsgemäßen Überzugsmitteln handelt es sich bevorzugt um zweikomponentige Systeme.

Die Einarbeitung der Polyisocyanate kann durch Einrühren bzw. Einemulgieren in das neutralisierte wäßrige Bindemittel erfolgen. Es kann günstig sein, wenn das Polyisocyanat mit einem wassermischbaren Lösemittel vorverdünnt wird. Dabei ist zu beachten, daß für die Verdünnung nicht blockierter Polyisocyanate Lösemittel eingesetzt werden, die keinen aktiven Wasserstoff enthalten, wie z.B. N-Methylpyrrolidon, Diethylenglykoldiethylether, Dipropylenglykoldimethylether, Butylglykolacetat, Butyldiglykolacetat, Methoxypropylacetat, oder andere Alkohole mit niedriger Reaktivität der OH-Gruppen, wie z.B. Diacetonalkohol.

Die erfindungsgemäß eingesetzten Überzugsmittel können pigmentiert oder unpigmentiert sein. Im Fall pigmentierter Überzugsmittel beträgt das Gewichtsverhältnis von Pigment und/oder Füllstoff zu Bindemittel plus Vernetzer (jeweils berechnet als Festbestandteil) beispielsweise abhängig vom Farbton von 0,03 : 1 bis 2 : 1. Werden die erfindungsgemäßen Überzugsmittel als Grundierung eingesetzt, so liegt das Pigment-/Bindemittel-Verhältnis zwischen 0,3 : 1 und 2 : 1, bevorzugt zwischen 0,8 : 1 und 1,2 : 1.

Beispiele für Pigmente und Füllstoffe sind übliche bunte, unbunte oder transparente, anorganische oder organische Pigmente und Füllstoffe, wie Ruß, Titandioxid, Eisenoxidpigmente, Siliziumdioxid, Bariumsulfat, Kaolin, Talkum, Korrosionsschutzpigmente, Leitfähigkeitspigmente, organische vernetzte Mikroteilchen, Azopigmente, Phthalocyaninpigmente.

Die Überzugsmittel können auch Effektpigmente enthalten, insbesondere bei der Formulierung als Basislacküberzugsmittel.

Die Pigmentierung der Überzugsmittel kann erfolgen unter Verwendung spezieller Pastenharze enthaltender Pigmentpasten, bevorzugt werden Pigmente und/oder Füllstoffe jedoch direkt im wäßrigen neutralisierten Bindemittel (A) angerieben oder damit vermischt. Das Anreiben kann in üblichen dem Fachmann bekannten Aggregaten geschehen, wie z.B. Perlmühlen, wobei bis auf sehr kleine Teilchengrößen vermahlen wird, um glatte Oberflächen der mit dem Überzugsmittel hergestellten Lackfilme zu erzielen.

Das Überzugsmittel kann bis zu 20 Gew.-% wassermischbare, organische Lösemittel enthalten. Die bevorzugte Untergrenze liegt bei 1 Gew.-%, bevorzugt sind weniger als 15 Gew.-% wassermischbares, organisches Lösemittel enthalten. Die Lösemittel können z.B. Bestandteil der durch Lösungspolymerisation hergestellten wäßrigen Bindemittel (A) sein. Beispiele für geeignete, wassermischbare, organische Lösemittel sind Dimethylformamid, N-Methylpyrrolidon, Ketone, wie Aceton, Methylethylketon, Alkohole, wie Isopropanol, Butanol oder die vorstehend erwähnten Glykolether und Glykoletherester.

Das erfindungsgemäß eingesetzte Überzugsmittel kann lackübliche Additive in lacküblichen Mengen (z.B. jeweils unter 5 Gew.-%, bezogen auf fertiges Überzugsmittel) enthalten. Beispiele sind nicht mit Wasser mischbare aliphatische Lösemittel, Antikratermittel, Antischaummittel, Dispergierhilfsmittel, Netzmittel, Verlaufsmittel, Verdickungsmittel, Lichtschutzmittel, Stabilisatoren, Katalysatoren.

Beim erfindungsgemäßen Verfahren können die Überzugsmittel direkt ohne zusätzliche Maßnahmen eingesetzt werden für die Lackierung relativ polarer Kunststoffsubstrate, wie z.B. Polycarbonat, Polyester, Polyurethan, Polyharnstoff, Polyamid, ABS-Kunststoff, PVC. Hat eine Vorbehandlung der Oberfläche von besonders unpolaren Polyolefinkunststoffen durch übliche polaritätserhöhende Methoden stattgefunden, wie z.B. Beflammen, UV-Bestrahlung, Anätzen mit chemischen Mitteln, Plasmabehandlung, Coronabehandlung, so können die Kunststoffoberflächen mit dem Überzugsmittel ebenfalls direkt beschichtet werden.

Bei der direkten Lackierung besonders unpolarer Kunststoffsubstrate, wie z.B. unvorbehandelte Polyolefinkunststoffe, kann es zweckmäßig sein, wenn die Überzugsmittel Haftungsverbesserer enthalten. Beispielsweise können für diesen Zweck bekannte Haftungsverbesserer auf Basis chlorierter Polyolefine mit einem Chlorierungsgrad zwischen 10 und 40 Gew.-% in Mengenanteilen zwischen 2 und 25 Gew.-%, bezogen auf Bindemittelfestkörper, im Überzugsmittel enthalten sein. Die Einarbeitung in das Überzugsmittel kann durch Einemulgieren erfolgen oder es werden wäßrige Zubereitungen von chlorierten Polyolefinen zugemischt. Derartige wasserdispergierbare chlorierte Polyolefine werden z.B. von der Firma Kodak-Eastman unter dem Namen CP 347 W oder CP 349 W als Handelsprodukte vertrieben.

Die Überzugsmittel besitzen im applikationsfertigen Zustand Festkörpergehalte von 30 bis 60, bevorzugt von 35 bis 50 Gew.-%.

Die Applikation der Überzugsmittel erfolgt beim erfindungsgemäßen Verfahren durch Rollen, Tauchen oder bevorzugt durch Spritzen. Die Trockenschichtdicken der erzeugten Lackschichten liegen zwischen 5 und 80 µm. Wird das Überzugsmittel zur Erzeugung von Grundierungsschichten eingesetzt, so liegen die Trockenschichtdicken bevorzugt zwischen 15 und 50 µm, während bei der Herstellung von Deck- oder Klarlackschichten höhere Trockenschichtdicken bevorzugt zwischen 20 und 60 µm erzeugt werden. Die Trockenschichtdicken von hergestellten Basislackschichten liegen bevorzugt zwischen 10 und 30 µm.

Nach der Applikation werden die nach dem erfindungsgemäßen Verfahren erzeugten Lackschichten getrocknet oder eingebrannt, wobei die Vernetzung erfolgt. Dies geschieht im Fall der mit freien Polyisocyanaten formulierten Überzugsmittel bei Temperaturen zwischen 20 und 120°C, bevorzugt zwischen 60 und 100°C, während die Temperaturen bei mit blockierten Polyisocyanaten formulierten Überzugsmitteln zwischen 100 und 180°C, bevorzugt zwischen 120 und 160°C gewählt werden.

Das erfindungsgemäße Verfahren eignet sich insbesondere für die Beschichtung von Kunststoffteilen, wie sie beispielsweise im Automobilbau eingesetzt werden. Bevorzugt findet das erfindungsgemäße Verfahren Verwendung zur Herstellung von Grundierungs-, Basislack-, Klarlack-, und Decklackschichten. Die erzeugten Grundierungsschichten oder Basislackschichten können mit weiteren Lackschichten versehen werden. Dies kann mit bekannten wäßrigen oder lösemittelhaltigen Überzugsmitteln geschehen, oder es werden entsprechend zusammengesetzte für das erfindungsgemäße Verfahren definierte Überzugsmittel verwendet.

Die mit dem erfindungsgemäßen verfahren erzeugten Lackschichten besitzen eine ausgezeichnete Haftung zu Kunststoffuntergründen und vermitteln eine ausgeprägte Haftung zu nachfolgend aufgebrachten Lackschichten.

Ohne an eine Theorie gebunden zu sein, wird angenommen, daß die überraschend gute Haftung der erzeugten Lackschichten zu den Kunststoffoberflächen und zu weiteren Lackschichten zustande kommt durch kovalente Einbindung der neutralisierend wirkenden Säure in den Lackfilm während der Vernetzung, verbunden mit der Ausbildung von polaritätserzeugenden Salzgruppen im Lackfilm.

### Herstellung wäßriger Bindemittel

### Beispiel 1

220 Teile Diethylenglykoldimethylether werden vorgelegt und unter Rühren und Rückflußkühlung auf 100°C geheizt. Innerhalb von 5 Stunden wird dann ein Gemisch aus 118 Teilen Isobutylacrylat, 171,5 Teilen Ethylhexylacrylat, 237,5 Teilen Methylmethacrylat, 77,3 Teilen 2-Hydroxypropylmethacrylat, 134,5 Teilen Dimethylaminopropylmethacrylat und 8,5 Teilen 2,2-Azobis(2-methylbutyronitril) kontinuierlich zudosiert. Nach Ende der Zudosierung werden 2,7 Teile 2,2-Azobis(2-methylbutyronitril) und 30 Teile Diethylenglykoldimethylether zugegeben und der Ansatz wird 5 Stunden bei 100°C gehalten. Danach werden 82 Teile Dimethylolpropionsäure hinzugefügt und weitere 30 min. bei 100°C gehalten. Nach Abkühlung auf 70°C wird mit deionisiertem Wasser portionsweise auf einen Festkörpergehalt von 30 Gew.-% verdünnt.

### Beispiel 2

Es wird wie in Beispiel 1 gearbeitet mit dem Unterschied, daß anstelle der Dimethylolpropionsäure 180 Teile durch Wasser hydrolysiertes epsilon-Caprolacton mit einer Säurezahl von 246 mg KOH/g als Neutralisationsmittel verwendet werden.

### Beispiel 3

Es wird wie in Beispiel 1 gearbeitet mit dem Unterschied, daß anstelle der Dimethylolpropionsäure 237 Teile 12-Hydroxystearinsäure als Neutralisationsmittel verwendet werden.

### Herstellung einer Kunststoffgrundierungsschicht

### Beispiel 4

40 Teile des wäßrigen Bindemittels aus Beispiel 1 werden unter dem Dissolver nacheinander mit 0,4 Teilen eines handelsüblichen Netzmittels, 0,2 Teilen eines handelsüblichen Verdickers (Bentone), 0,4 Teilen eines handelsüblichen Entschäumers, 10 Teilen Titandioxid, 1 Teil Ruß, 9 Teilen Bariumsulfat, 1 Teil Butylglykol und 28 Teilen deionisierten Wassers versetzt. Nach gründlichem Homogenisieren wird auf einer Perlmühle vermahlen. Danach wird mit einer Mischung aus 3 Teilen N-Methylpyrrolidon und 7 Teilen eines handelsüblichen, wasseremulgierbaren Polyisocyanats auf Basis von Hexamethylendiisocyanat gründlich vermischt. Mit deionisiertem Wasser wird auf eine Viskosität von 30 Sekunden (DIN 4-Becher) eingestellt und danach werden durch Spritzauftrag Prüfplatten aus Polycarbonat (Xenoy CL 101 der Firma General Electric Plastics) in einer Trockenschichtdicke von 25 µm lackiert. Nach kurzem Ablüften wird 30 min. bei 80°C ausgehärtet. Man erhält eine Kunststoffgrundierung mit hervorragender Haftung und Feuchtigkeitsbeständigkeit.

### Herstellung einer einschichtigen Kunststoffdecklackierung (Kontrastfarbton mittelgrau für Karosseriebeplankung)

### Beispiel 5

45 Teile des wäßrigen Bindemittels aus Beispiel 1 werden unter dem Dissolver nacheinander mit 0,6 Teilen eines handelsüblichen Netzmittels, 0,3 Teilen eines handelsüblichen Verdickers (Bentone), 0,6 Teilen eines handelsüblichen Entschäumers, 8 Teilen Titandioxid, 0,5 Teilen Ruß, 1 Teil Butylglykol und 24 Teilen deionisierten Wassers versetzt. Nach gründlichem Homogenisieren wird auf einer Perlmühle vermahlen. Danach wird mit einer Mischung aus 5 Teilen N-Methylpyrrolidon und 15 Teilen des Polyisocyanats aus Beispiel 4 gründlich vermischt.

Verdünnung auf Verarbeitungsviskosität und Applikation erfolgt wie in Beispiel 4 beschrieben mit dem Unterschied, daß in einer Trockenschichtdicke von 35 µm lackiert wird. Die Aushärtung erfordert 40 min. bei 80°C. Man erhält eine mittelgraue Decklackschicht, wie sie für Kontrastfarbtöne bei Karosseriebeplankungen aus Kunststoff üblich ist. Die Feuchtigkeits-und Wetterbeständigkeit ist gut. Die Haftung ist auch ohne darunter befindliche Grundierungsschicht hervorragend.

### Herstellung einer Mehrschichtlackierung

### Beispiel 6

60 Teile des wäßrigen Bindemittels aus Beispiel 1 werden mit 0,5 Teilen eines handelsüblichen Verlaufsmittels, 0,5 Teilen eines handelsüblichen Entschäumers, 1 Teil eines 1 : 1-Gemisches handelsüblicher Lichtschutzmittel auf HALS- und Benztriazolbasis, 2 Teilen Butylglykol und 6 Teilen deionisierten Wassers gleichmäßig vermischt. Danach wird eine Mischung aus 7 Teilen N-Methylpyrrolidon und 23 Teilen des Polyisocyanats aus Beispiel 4 zugemischt und homogenisiert. Mit deionisiertem Wasser wird die Applikationsviskosität wie in Beispiel 4 eingestellt, hier jedoch auf 25 Sekunden.

Der so erhaltene Klarlack wird durch Naß-in-Naß-Spritzauftrag in einer Trockenschichtdicke von 35 µm auf eine mit unausgehärtetem Wasserbasislack (Silbermetallic, Trockenschichtdicke 15 µm) versehene, abgelüftete Kunststoffprüfplatte appliziert und nach 3 min. Ablüften 40 min. bei 80°C ausgehärtet. Man erhält eine Mehrschichtlackierung mit guter Feuchtigkeits-und Wetterbeständigkeit, hohem Glanz und guter Haftung des Klarlacks zum Basislack.

## Patentansprüche

1. Verfahren zur Beschichtung von Substraten durch Auftrag und Härten eines wäßrigen Überzugsmittels, wobei der Auftrag durch Spritzen, Rollen oder Tauchen erfolgt, dadurch gekennzeichnet, daß man ein wäßriges Überzugsmittel auf der Basis von Polyolen mit Ammoniumgruppen und Polyisocyanaten, das Pigmente und/oder Füllstoffe, lackübliche Additive und ein oder mehrere organische Lösemittel enthalten kann, aufträgt, das
A) als Bindemittel mindestens ein (Meth)acrylcopolymeres mit einer Hydroxylzahl von 20 bis 150 mg KOH/g und mit einer Aminzahl von 10 bis 150 mg KOH/g, jeweils bezogen auf Festharz, wobei 2 bis 50 Gew.-% des Bindemittels-Harzfestkörpers durch ein oder mehrere andere Bindemittel ersetzt sein können, wobei das (Meth)acrylcopolymer mit einer Säure neutralisiert ist, die mindestens eine gegenüber Isocyanat reaktive Gruppe besitzt; und B) als Vernetzer mindestens ein Polyisocyanat enthält, das blockiert sein kann,
wobei die Komponenten A) und B) in solchen Mengen vorliegen, daß das Verhältnis der Summe aus Hydroxylgruppen und gegebenenfalls vorhandenen NH-Gruppen im (Meth)acrylcopolymeren (A) plus den mit Isocyanat reaktiven Gruppen der zur Neutralisation eingesetzten Säuren zu den blockierten und nichtblockierten Isocyanatgruppen der Komponente B) 1 : 0,5 bis 1 : 3 beträgt.

2. Verfahren nach Anspruch 1, dadurch gekennzeichnet, daß als Säure mit mindestens einer gegenüber Isocyanat reaktiven Gruppe ein- oder mehrbasische Carbonsäuren, Phosphonsäuren und/oder Sulfonsäuren mit mindestens einer primären Amin- und/oder sekundären Amin- und/oder Hydroxy- und/oder Mercaptogruppe im Molekül verwendet wird.

3. Verfahren nach Anspruch 1 oder 2, dadurch gekennzeichnet, daß als Säure mit mindestens einer gegenüber Isocyanat reaktiven Gruppe eine Hydroxycarbonsäure, Dihydroxycarbonsäure oder Polyhydroxycarbonsäure verwendet wird.

4. Verfahren nach einem der Ansprüche 1 bis 3, dadurch gekennzeichnet, daß in der Komponente A) (Meth)acrylcopolymere mit einer gewichtsmittleren Molekularmasse (Mw) von 2000 bis 150000 verwendet werden.

5. Verfahren nach einem der Ansprüche 1 bis 4, dadurch gekennzeichnet, daß in der Komponente A) (Meth)acrylcopolymere verwendet werden, die erhältlich sind durch radikalisch initiierte Polymerisation von 0,5 bis 40 Gew.-% eines oder mehrerer (Meth)acrylamide von omega-tert.-Aminoalkylaminen und/oder eines oder mehrerer (Meth)acrylate von omega-tert.-Aminoalkoholen, 5 bis 40 Gew.-% eines oder mehrerer Hydroxyalkyl(meth)acrylate und/oder eines oder mehrerer Hydroxyalkyl(meth)acrylamide und 20 bis 94,5 Gew.-% eines oder mehrerer davon unterschiedlicher Comonomerer.

6. Verfahren nach einem der Ansprüche 1 bis 5, dadurch gekennzeichnet, daß die Säuren, die mindestens eine gegenüber Isocyanat reaktive Gruppe besitzen, in solcher Menge zugesetzt werden, daß pro Aminäquivalent im (Meth)acrylcopolymeren (A) 0,6 bis 1,5 Äquivalente Säure vorhanden sind.

7. Verfahren nach einem der Ansprüche 1 bis 6, dadurch gekennzeichnet, daß in der Komponente A) als weiteres Bindemittel ein oder mehrere Polyester, Polyurethane und/oder unterschiedliche (Meth)acrylcopolymere verwendet werden.

8. Verfahren nach einem der Ansprüche 1 bis 7, dadurch gekennzeichnet, daß es für Lackierzwecke auf dem Kraftfahrzeugsektor durchgeführt wird.

## Claims

1. A process for coating substrates by application and curing of an aqueous coating agent, application being effected by spraying, rolling or dipping, characterised in that an aqueous coating agent which is based on polyols with ammonium groups and polyisocyanates and which may contain pigments and/or fillers, additives that are conventional in lacquers and one or more organic solvents is applied which
A) comprises by way of binding agent at least one (meth)acrylic copolymer with a hydroxy number from 20 to 150 mg KOH/g and with an amine number from 10 to 150 mg KOH/g, in each case in relation to solid resin, whereby 2 to 50 wt. % of the resin solids of the binding agent may be replaced by one or more other binding agents, the (meth)acrylic copolymer being neutralised with an acid possessing at least one group that reacts with isocyanate; and
B) contains by way of crosslinker at least one polyisocyanate, which may be blocked,
components A) and B) being present in such quantities that the ratio of the sum of hydroxyl groups and optionally present NH groups in the (meth)acrylic copolymer (A) plus the isocyanate-reactive groups of the acids that are employed for neutralisation to the blocked and non-blocked isocyanate groups of component B) amounts to 1 : 0.5 to 1 : 3.

2. Process according to Claim 1, characterised in that by way of acid with at least one group that reacts with isocyanate use is made of monobasic or polybasic carboxylic acids, phosphonic acids and/or sulfonic acids with at least one primary amine group and/or secondary amine group and/or hydroxy group and/or mercapto group in the molecule.

3. Process according to Claim 1 or 2, characterised in that by way of acid with at least one group that reacts with isocyanate use is made of a hydroxycarboxylic acid, dihydroxycarboxylic acid or polyhydroxycarboxylic acid.

4. Process according to one of Claims 1 to 3, characterised in that in component A) use is made of (meth)acrylic copolymers with a weight-average molecular mass (Mw) from 2,000 to 150,000.

5. Process according to one of Claims 1 to 4, characterised in that in component A) use is made of (meth)acrylic copolymers that are obtainable by radically initiated polymerisation of 0.5 to 40 wt. % of one or more (meth)acrylamides of omega-tert. aminoalkylamines and/or one or more (meth)acrylates of omega-tert. amino alcohols, 5 to 40 wt. % of one or more hydroxyalkyl (meth)acrylates and/or one or more hydroxyalkyl (meth)acrylamides and 20 to 94.5 wt. % of one or more comonomers differing from the above.

6. Process according to one of Claims 1 to 5, characterised in that the acids possessing at least one group that reacts with isocyanate are added in such quantity that 0.6 to 1.5 acid equivalents are present per amine equivalent in the (meth)acrylic copolymer (A).

7. Process according to one of Claims 1 to 6, characterised in that by way of additional binding agent in component A) use is made of one or more polyesters, polyurethanes and/or different (meth)acrylic copolymers.

8. Process according to one of Claims 1 to 7, characterised in that it is implemented for lacquering purposes in the automobile industry.

## Revendications

1. Procédé pour le revêtement de substrats consistant à déposer et à durcir un matériau de revêtement aqueux, en réalisant le dépôt par pulvérisation, au rouleau ou au trempé, caractérisé en ce que, l'on dépose un matériau, de revêtement aqueux à bases de polyols ayant des groupes ammonium et des polyisocyanates, qui peut contenir des pigments et/ou des charges, des additifs usuels des peintures et un ou plusieurs solvants organiques, qui contient
A) comme liant au moins un copolymère (méth)acrylique ayant un indice d'hydroxyle variant de 20 à 150 mg KOH/g et ayant un indice d'amine variant de 10 à 150 mg KOH/g, par rapport à la résine solide, respectivement, de 2 à 50% en poids de la matière solide de la résine du liant pouvant être remplacé par un ou plusieurs autres liants, dans lequel le copolymère (méth)acrylique est neutralisé avec un acide, qui possède au moins un groupe réactif vis à vis de l'isocyanate; et
B) comme agent réticulant au moins un polyisocyanate, qui peut être bloqué,
dans lequel les composants A) et B) se présentent en quantités telles que le rapport de la somme des groupes hydroxyle et des groupes NH éventuellement présents dans le copolymère (méth)acrylique (A) plus des groupes réactifs avec l'isocyanate des acides utilisés à la neutralisation par rapport aux groupes isocyanate bloqués et non bloqués du composant B) s'élève de 1 : 0,5 à 1 : 3.

2. Procédé selon la revendication 1, caractérisé en ce qu'on utilise comme acide ayant au moins un groupe réactif vis à vis de l'isocyanate des acides carboxyliques, des acides phosphoniques et/ou des acides sulfoniques mono ou polyfonctionnels ayant au moins un groupe amine primaire et/ou amine secondaire et/ou hydroxy et/ou mercapto dans la molécule.

3. Procédé selon la revendication 1 ou 2, caractérisé en ce qu'on utilise comme acide ayant au moins un groupe réactif vis à vis de l'isocyanate un acide hydroxycarboxylique, dihydroxycarboxylique ou polyhydroxycarboxylique.

4. Procédé selon l'une des revendications 1 à 3, caractérisé en ce qu'on utilise dans le composant A) des copolymères (méth)acryliques ayant une masse moléculaire moyenne en masse (Mw) variant de 2000 à 150000.

5. Procédé selon l'une des revendications 1 à 4, caractérisé en ce qu'on utilise dans le composant A) des copolymères (méth)acryliques qu'on peut obtenir par polymérisation initiée par des radicaux libres de 0,5 à 40% en poids d'un ou de plusieurs (méth)acrylamides de oméga-tert.-aminoalkylamines et/ou d'un ou de plusieurs (méth)acrylates de oméga-tert.-aminoalcools, de 5 à 40% en poids d'un ou de plusieurs (méth)acrylates d'hydroxyalkyle et/ou d'un ou de plusieurs hydroxyalkyl(méth)acrylamides et de 20 à 94,5% en poids d'un ou de plusieurs comonomères différents de ceux-ci.

6. Procédé selon l'une des revendications 1 à 5, caractérisé en ce qu'on utilise les acides, qui possèdent au moins un groupe réactif vis à vis de l'isocyanate, en une quantité telle que, par équivalent d'amine dans le copolymère (méth)acrylique (A), de 0,6 à 1,5 équivalents d'acide sont présents.

7. Procédé selon l'une des revendications 1 à 6, caractérisé en ce qu'on utilise comme liant supplémentaire dans le composant (A) un ou plusieurs polyesters, polyuréthanes et/ou des copolymères (méth)acryliques différents.

8. Procédé selon l'une des revendications 1 à 7, caractérisé en ce qu'on le met en oeuvre pour des applications à la peinture dans le secteur des véhicules à moteur.
